(19) Europäisches Patentamt
European Patent Office
Office européen des brevets

(11) Publication number: 0 103 981
A1

(12) # EUROPEAN PATENT APPLICATION

(21) Application number: 83304723.6

(22) Date of filing: 15.08.83

(51) Int. Cl.³: C 01 B 33/28
B 01 J 29/28

(30) Priority: 03.09.82 GB 8225152

(43) Date of publication of application: 28.03.84 Bulletin 84/13

(84) Designated Contracting States: BE DE FR GB IT NL

(71) Applicant: IMPERIAL CHEMICAL INDUSTRIES PLC
Imperial Chemical House Millbank
London SW1P 3JF(GB)

(72) Inventor: Whittam, Thomas Vincent
30 Wilton Drive
Darlington County Durham(GB)

(74) Representative: Martin, David Lincoln et al,
Imperial Chemical Industries PLC Legal Department: Patents Po Box 6
Welwyn Garden City Herts, AL7 1HD(GB)

(54) **Zeolites.**

(57) A new synthetic crystalline zeolite material, zeolite Nu-23, is described which is a hydrophilic zeolite having ports in the range of 5 to 6.3Å. The zeolite material has a molar composition, on a calcined basis, expressed by the formula:

$$0.5 \text{ to } 1.5\ M_{2/n}O : X_2O_3 : \text{at least } 5\ YO_2$$

and it has a defined X-ray diffraction pattern. It is prepared from an aqueous mixture which contains cyclohexylamine or certain derivatives thereof and it finds use as a catalyst or in the separation of mixtures of organic compounds.

EP 0 103 981 A1

Croydon Printing Company Ltd

Zeolites

THE PRESENT INVENTION relates to a novel zeolite material hereinafter referred to as Nu-23, and to methods for its preparation.

Aluminosilicate zeolites are now widely used in industry. Some occur only in nature, others are only available as a result of chemical synthesis and some are available in both natural and synthetic forms. Synthetic zeolites are attracting more and more attention and it is becoming more and more possible to control the preparation of such zeolites so as to tailor their properties to particular needs.

According to the present invention a crystalline zeolite material, Nu-23, has a composition (in terms of mole ratios of oxides and on a calcined basis) expressed by the formula:

$0.5 \text{ to } 1.5\ M_{2/n}O : X_2O_3 : \text{at least } 5\ YO_2$

wherein M is hydrogen, an alkali metal cation or alkaline earth metal cation, n is the valency of M, Y is silicon and/or germanium and/or phosphorus, and X is one or more of aluminium, gallium or boron and has an X-ray powder diffraction pattern substantially as set out in Table 1 (as determined by standard technique using copper K$\alpha$ radiation). Table 1 shows X-ray data for zeolite Nu-23 as prepared and for the calcined sodium-hydrogen form of zeolite Nu-23.

Table 1

| Nu-23 as made | | Sodium-hydrogen form of Nu-23 | |
|---|---|---|---|
| d(A) | I/Io | d(A) | I/Io |
| 11.3 | 5 | | |
| 9.4 | 53 | 9.4 | 79 |
| 7.00 | 21 | 6.96 | 45 |
| 6.89 | 13 | 6.89 | 34 |
| 6.58 | 12 | 6.55 | 26 |
| | | 5.73 | 12 |
| 5.70 | 14 | 5.65 | 16 |
| | | 5.35 | 1 |
| 4.94 | 6 | 4.92 | 2 |
| 4.72 | 3 | 4.70 | 4 |
| 4.25 | 1 | 4.24 | 2 |
| 3.966 | 66 | 3.951 | 72 |
| 3.931 | 39 | 3.906 | 51 |
| 3.822 | 35 | 3.814 | 37 |
| 3.771 | 49 | 3.755 | 57 |
| 3.638 | 24 | 3.633 | 29 |
| 3.535 | 100 | 3.517 | 100 |
| 3.467 | 75 | 3.454 | 80 |
| 3.355 | 21 | 3.342 | 27 |
| 3.317 | 28 | 3.294 | 23 |
| 3.246 | 4 | | |
| 3.127 | 27 | 3.116 | 38 |
| 3.038 | 18 | 3.030 | 22 |
| 2.939 | 8 | 2.931 | 12 |
| 2.887 | 8 | 2.878 | 11 |
| 2.818 | 4 | 2.819 | 6 |
| 2.702 | 5 | 2.692 | 7 |
| 2.645 | 8 | 2.632 | 8 |
| 2.575 | 5 | 2.562 | 5 |

Table 1 Cont'd

| Nu-23 as made | | Sodium-hydrogen form of Nu-23 | |
|---|---|---|---|
| d(A) | I/Io | d(A) | I/Io |
| 2.530 | 2 | 2.523 | 2 |
| 2.471 | 6 | 2.461 | 6 |
| 2.399 | 6 | 2.392 | 7 |
| 2.332 | 5 | 2.336 | 7 |
| 2.285 | 3 | 2.297 | 4 |
| 2.244 | 4 | 2.232 | 4 |
| 2.177 | 1 | | |
| 2.142 | 3 | 2.132 | 4 |
| 2.109 | 3 | 2.100 | 4 |
| 2.019 | 8 | 2.021 | 14 |
| 1.992 | 9 | 1.987 | 16 |
| 1.949 | 4 | 1.939 | 6 |
| 1.923 | 11 | 1.915 | 13 |
| 1.865 | 7 | 1.858 | 8 |

Results of sorption experiments on the hydrogen forms of zeolite Nu-23 suggest that it is hydrophilic, an unusual property for such a siliceous zeolite and one which may affect its catalytic properties. While there are ports at about 6.3Å, most of the voidage in the zeolite is available only to molecules smaller than about 5.9Å. The Applicants believe therefore that zeolite Nu-23 will be useful for separating cyclic molecules having a size in the range 5 to 6.3Å from each other and from larger molecules. Having ports of this size range, the zeolite is also likely to be useful as a component of a catalyst, for example in alkylbenzene isomerisation.

Within the above definition of chemical composition, the number of moles of $YO_2$ is typically in the range 5 to 5,000 and zeolite Nu-23 appears to be most readily formed in a state of high purity when the number of moles of $YO_2$ is in the range 25 to 100.

This definition includes both freshly prepared zeolite Nu-23 ("freshly prepared" means the product of synthesis and washing, with

optional drying, as hereinbefore described) and also forms of it resulting from dehydration, and/or calcination, and/or ion exchange. In freshly prepared zeolite Nu-23, M may include an alkali metal cation, especially sodium, and/or ammonium, and always includes nitrogen-containing organic bases, such as cyclohexane derivatives or cationic degradation products thereof, or precursors thereof, or mixtures of such compounds. These bases are hereinafter referred to as Q. Thus a zeolite Nu-23 as made typically has the following molar composition:

$$0.5 \text{ to } 1.5\ M_{2/n}O : 0.2 \text{ to } 130\ Q : X_2O_3 : 10 \text{ to } 5{,}000\ YO_2 : 0 \text{ to } 20{,}000\ H_2$$

The $H_2O$ content of freshly prepared zeolite Nu-23 depends on the conditions in which it has been dried after synthesis.

In calcined forms of zeolite Nu-23, M may be alkali metal or alkaline earth metal but includes less or no base-containing organic compounds, since these are burnt out in the presence of air, leaving hydrogen as the other balancing cation.

Among the ion-exchanged forms of zeolite Nu-23 the ammonium ($NH_4^+$) form is of importance since it can be readily converted to the hydrogen form by calcination. The hydrogen form can also be prepared directly by exchange with an acid.

This invention also comprises a method of making zeolite Nu-23 which comprises reacting an aqueous mixture containing at least one oxide $YO_2$, at least one oxide $X_2O_3$, and at least one organic compound selected from cyclohexylamine and derivatives thereof, the organic compound(s) having the formula

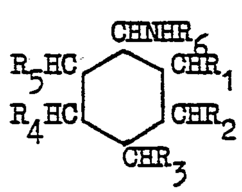

where $R_1$ to $R_5$ which can be the same or different are selected from hydrogen, hydroxyl, $C_1$ to $C_4$ alkyl, and are preferably hydrogen or methyl and $R_6$ is selected from hydrogen and $C_1$ to $C_4$

alkyl, and is preferably hydrogen or methyl.

The reaction mixtures preferably have the following molar composition:

$YO_2/X_2O_3 \geqslant 10$, preferably in the range 10 to 10,000, more preferably in the range 25 to 100;

$H_2O/YO_2 \geqslant 10$, preferably in the range 10 to 200, more preferably in the range 15 to 50;

$Q/YO_2 \geqslant 0.10$, preferably in the range 0.01 to 1.5, more preferably in the range 0.20 to 1.0;

$\frac{2}{n}$ $A/YO_2 \geqslant 0.2$, preferably in the range 0.4 to 0.8 where A is a chloride or sulphate anion;

$OH^-/YO_2 \geqslant 0.05$, preferably in the range 0.05 to 0.5, more preferably in the range 0.05 to 0.3;

$H_2O/OH^- \geqslant 100$, preferably in the range 100 to 1,000, more preferably in the range 120 to 700;

where Y is silicon and/or germanium, and/or phosphorus and X is aluminium, and/or gallium and/or boron. $OH^-$ includes free alkali.

The preferred alkali metal (M) is sodium. The preferred oxide $YO_2$ is silica ($SiO_2$) and the preferred oxide $X_2O_3$ is alumina ($Al_2O_3$). The preferred organic compound is cyclohexylamine.

The silica source can be any of those commonly considered for use in synthesising zeolites, for example powdered solid silica, silicic acid, colloidal silica or dissolved silica. Among the powdered silicas usable are precipiated silicas, especially those made by precipitation from an alkali metal silicate solution, such as the type known as "KS 300" made by AKZO, and similar products, aerosil silicas, fume silicas and silica gels suitable in grades for use in reinforcing pigments for rubber or silicone rubber. Colloidal silicas of various particle sizes may be used, for example 10 to 15 or 40 to 50 microns, as sold under the Registered Trade Marks "LUDOX", "NALCOAG" and "SYTON". The usable dissolved silicas include commercially available waterglass silicates containing 0.5 to 6.0, especially 2.0 to 4.0 mols, of $SiO_2$ per mol of alkali metal oxide,

"active" alkali metal silicates as defined in UK Patent 1,193,254, and silicates made by dissolving silica in alkali metal hydroxide or quaternary ammonium hydroxide or a mixture thereof.

The alumina source is most conveniently sodium aluminate, but can be or include an aluminium or aluminium salt for example the chloride, nitrate or sulphate or alumina itself, which should preferably be in a hydrated or hydratable form such as colloidal alumina, pseudoboehmite, boehmite, gamma alumina or the alpha or beta hydrate.

The reaction mixture is reacted under autogeneous pressure or with added nitrogen pressure if desired, at temperatures between 85 to 250°C until crystals of zeolite Nu-23 form, which can be from 1 hour to many months depending on the reactant composition and the operating temperature. Agitation is optional, but preferable since it reduces the reaction time.

At the end of the reaction, the solid phase is collected on a filter and washed and is then ready for further steps such as drying, dehydration and ion-exchange.

If the product of the reaction contains alkali metal ions, these have to be at least partly removed in order to prepare the hydrogen form of Nu-23 and this can be done by ion exchange with an acid, especially a strong mineral acid such as hydrochloric acid or by way of the ammonium compound, made by ion exchange with a solution of an ammonium salt such as ammonium chloride. Such ion exchange can be carried out by slurrying once or several times with the solution. The zeolite is usually calcined after ion exchange and may be calcined before or between stages.

In general, the cation(s) of zeolite Nu-23 can be replaced by any cation(s) of metals, and particularly those in Groups IA, IB, IIA, IIB, III (including rare earths) VIII (including noble metals) and by lead, tin and bismuth. (The Periodic Table is as in "Abridgments of Specifications" published by the U.K. Patent Office). Exchange is carried out using any water soluble salts containing the appropriate cation.

In order to prepare a catalyst, zeolite Nu-23 can be incorporated in an inorganic matrix, with other materials which can be either inert or catalytically active. The matrix may be present

simply as a binding agent to hold the small zeolite particles (0.005 to 10 microns) together, or it may be added as a diluent to control the amount of conversion in a process which may otherwise proceed at too high a rate, leading to catalyst fouling as a result of excessive coke formation. Typical inorganic diluents include catalyst support materials such as alumina, silica and kaolinic clays, bentonites, montmorillonites, sepiolite, attapulgite, Fullers earth, synthetic porous materials such as $SiO_2$-$Al_2O_3$, $SiO_2$-$ZrO_2$, $SiO_2$-$ThO_2$, $SiO_2$-BeO, $SiO_2$-$TiO_2$ or any combination of these oxides. An effective way of mixing zeolite Nu-23 with such diluents is to mix appropriate aqueous slurries in a mixing nozzle and then to spray-dry the slurry. Other ways of mixing can be used.

Zeolite Nu-23 may be used in the separation of organic compounds, for example mixtures of hydrocarbons, for example mixtures of xylene isomers and it may be used as a catalyst, for example in processes for the production or conversion of hydrocarbons, for example in the alkylation or disproportionation of aromatic hydrocarbons. Processes in which the zeolite may be used include the methylation of toluene, the disproportionation of toluene to form benzene and xylenes, the conversion of methanol and/or dimethyl ether to hydrocarbons, and the isomerisation of alkylbenzenes, for example xylenes.

The invention is further illustrated by the following examples.

EXAMPLE 1

Zeolite Nu-23 was prepared from a reaction mixture having the following molar composition.

$2.74Na_2O$: 21.1Q: $Al_2O_3$: $26.2SiO_2$: $659H_2O$: 15.6NaCl

73g KS 300 silica ($5.09Na_2O$: $Al_2O_3$: $728SiO_2$: $24.8H_2O$) were dispersed in 450g water containing 38g sodium chloride. Next 8g sodium aluminate (1.22 $Na_2O$; $Al_2O_3$; $1.18H_2O$) and 4.6g sodium hydroxide in 42g water were stirred into the silica suspension. Finally 88g cyclohexylamine were stirred in and the mixture was reacted at 150°C for 4 days in a stirred stainless steel autoclave. The slurry product was filtered and washed three times, each time with one litre of distilled water, and then dried overnight at 120°C. The product was highly crystalline sodium cyclohexylamine Nu-23 having

the characteristic X-ray data shown in Table 1 columns 1 and 2 and a molar composition of

0.67 $Na_2O$: 0.54 cyclohexylamine: $Al_2O_3$: $22SiO_2$: $11.2H_2O$

EXAMPLE 2

The product of example 1 was calcined in air (saturated with water at 25°C) for 48 hours at 450°C. The resulting sodium hydrogen Nu-23 had the X-ray data shown in Table 1 columns 3 and 4. While this data shows that only minor changes occur on calcination, these do result in some significant intensity changes and in shifts in peak positions. The calcined Nu-23 was slurry exchanged with 5ml N hydrochloric acid per g of zeolite for 1 hour at 60°C, and then washed with distilled water twice using 10ml water per g of zeolite. Finally the hydrogen Nu-23 was dried overnight at 120°C and then calcined for 3 hours at 450°C in moist air. This product had X-ray data identical with that of sodium hydrogen Nu-23 and had the following molar composition ignoring hydrogen and 0.1%w carbon.

0.01 $Na_2O$ : $Al_2O_3$ : $24SiO_2$.

Table 2 gives sorption results obtained at 25°C on hydrogen Nu-23. These results show that H-Nu-23 has a dual port system, one set of ports of aperture about 6.3Å and the other ports having apertures less than 5.9Å.

Table 2

| Adsorbate | Kinetic diameter σ (A) | $P/P_o$ | Time (mins) | wt adsorbed g/100g | Voidage Available cc/100g |
|---|---|---|---|---|---|
| Water | 2.7 | 0.3 | 10<br>60<br>120 | 10.4<br>11.8<br>12.1 | 10.4<br>11.8<br>12.1 |
| n-hexane | 4.3 | 0.33 | 10<br>60<br>120 | 5.8<br>6.5<br>6.7 | 6.7<br>7.5<br>10.1 |
| p-xylene | 5.9 | 0.5 | 10<br>60<br>120 | 1.9<br>2.8<br>3.2 | 2.2<br>3.2<br>3.7 |
| m-xylene | 6.2 | 0.5 | 10<br>60<br>120 | 1.9<br>2.5<br>3.2 | 2.2<br>2.9<br>3.7 |
| cyclohexane | 6.3 | 0.5 | 10<br>60<br>120 | 0.8<br>2.1<br>2.6 | 1.0<br>2.7<br>3.3 |

EXAMPLE 3

Example 1 was repeated except that 102g 2-aminocyclohexanol replaced the cyclohexylamine and the reaction was for only 48 hours at 150°C. The product was again highly crystalline Nu-23 having the X-ray data given in columns 1 and 2 of Table 3. This product was calcined and exchanged as in Example 2. The final calcined hydrogen Nu-23 had the X-ray data given in Table 3 columns 3 and 4, and a molar composition

$0.008\ Na_2 : Al_2O_3 : 22.5SiO_2$

ignoring hydrogen and 0.07%w carbon.

Table 3

| Example 3, as made | | Hydrogen Nu-23 of Example 3 | |
|---|---|---|---|
| d(A) | I/Io | d(A) | I/Io |
| 11.3 | 3 | | |
| 9.45 | 47 | 9.4 | 77 |
| 7.05 | 22 | 7.00 | 46 |
| 6.90 | 18 | 6.90 | 37 |
| 6.60 | 10 | 6.57 | 26 |
| 5.72 | 14 | 5.73 | 12 |
| 5.62 | 12 | 5.65 | 15 |
| | | 5.34 | 1 |
| 4.95 | 4 | 4.92 | 2 |
| 4.81 | 5 | 4.77 | 5 |
| 3.974 | 67 | 3.970 | 74 |
| 3.928 | 38 | 3.920 | 50 |
| 3.839 | 35 | 3.831 | 37 |
| 3.774 | 52 | 3.768 | 60 |
| 3.652 | 27 | 3.646 | 31 |
| 3.538 | 100 | 3.520 | 100 |
| 3.470 | 79 | 3.464 | 82 |
| 3.369 | 20 | 3.359 | 25 |
| 3.316 | 28 | 3.302 | 25 |
| 3.135 | 29 | 3.126 | 41 |
| 3.048 | 22 | 3.041 | 25 |
| 2.948 | 9 | 2.941 | 12 |
| 2.892 | 10 | 2.884 | 12 |
| 2.842 | 4 | 2.842 | 6 |
| 2.708 | 6 | 2.700 | 7 |
| 2.646 | 7 | 2.635 | 8 |

Table 3 (Cont'd)

| Example 3, as made | | Hydrogen Nu-23 of Example 3 | |
|---|---|---|---|
| d(A) | I/Io | d(A) | I/Io |
| 2.579 | 5 | 2.569 | 5 |
| 2.540 | 2 | 2.536 | 2 |
| 2.476 | 7 | 2.466 | 6 |
| 2.404 | 6 | 2.395 | 7 |
| 2.347 | 5 | 2.349 | 6 |
| 2.310 | 4 | 2.310 | 4 |
| 2.243 | 4 | 2.238 | 4 |
| 2.177 | 1 | | |
| 2.147 | 2 | 2.140 | 4 |
| 2.113 | 3 | 2.108 | 4 |
| 2.023 | 8 | 2.025 | 12 |
| 1.995 | 9 | 1.990 | 14 |
| 1.949 | 5 | 1.942 | 6 |
| 1.926 | 13 | 1.923 | 14 |
| 1.867 | 8 | 1.861 | 8 |

EXAMPLE 4

Example 1 was repeated except that in this example 101g methyl-aminocyclohexane replaced the cyclohexylamine used in Example 1. The product after 2 days at 150°C was again a highly crystalline zeolite Nu-23.

EXAMPLE 5

A reaction mixture was prepared having the molar composition
$30.5Na_2O : 30Q : Al_2O_3 : 92.9SiO_2 : 4405H_2O : 27.2H_2SO_4$
172g Water glass (ICI Q79 grade) ($385Na_2O : Al_2O_3 : 1169SiO_2 : 9308H_2O$) were mixed into 300g water containing 24.4g cyclohexylamine. Next 4.8g aluminium sulphate ($Al_2O_3$ $3SO_3$, $16H_2O$) and 19.4g sulphuric acid (98%) in 244g water stirred into the mix. Reaction was for 6 days at 150°C in a stirred stainless steel autoclave. The procedure was then as in Examples 1 and 2 and the calcined sodium

hydrogen zeolite had the following molar composition ignoring hydrogen and 0.12%w carbon.

$0.3\ Na_2O : Al_2O_3 : 55SiO_2$

The X-ray data for this product are given in Table 4 columns 1 and 2 and demonstrates that the product was once more a highly crystalline Nu-23 zeolite.

TABLE 4

| Nu-23 from Example 5 | | Nu-23 from Example 6 | |
|---|---|---|---|
| d(A) | I/Io | d(A) | I/Io |
| 11.2 | 2 | 11.3 | 9 |
| 9.3 | 48 | 9.45 | 60 |
| 7.05 | 20 | 7.03 | 21 |
| | | 6.89 | 15 |
| | | 6.59 | 8 |
| 5.70 | 12 | 5.73 | 15 |
| 4.90 | 5 | 4.95 | 5 |
| 4.73 | 12 | 4.73 | 3 |
| | | 4.57 | 1 |
| 3.960 | 65 | 3.974 | 67 |
| 3.928 | 39 | 3.930 | 36 |
| 3.835 | 38 | 3.831 | 35 |
| 3.765 | 48 | 3.774 | 46 |
| 3.635 | 22 | 3.644 | 21 |
| 3.543 | 100 | 3.538 | 100 |
| 3.463 | 70 | 3.470 | 73 |
| 3.335 | 20 | 3.367 | 15 |
| 3.317 | 27 | 3.316 | 24 |
| 3.038 | 20 | 3.042 | 15 |
| | | 2.942 | 7 |
| | | 2.892 | 6 |
| 2.808 | 8 | 2.833 | 3 |
| | | 2.702 | 3 |
| 2.663 | 11 | 2.647 | 6 |

Table 4 (Cont'd)

| Nu-23 from Example 5 | | Nu-23 from Example 6 | |
|---|---|---|---|
| d(A) | I/Io | d(A) | I/Io |
| 2.566 | 5 | 2.579 | 3 |
| 2.524 | 2 | | |
| 2.466 | 5 | 2.473 | 5 |
| 2.378 | 5 | 2.399 | 4 |
| 2.336 | 9 | 2.344 | 4 |
| | | 2.304 | 3 |
| 2.240 | 4 | 2.250 | 3 |
| 2.159 | 3 | 2.142 | 3 |
| 2.090 | 7 | 2.111 | 2 |
| 1.992 | 9 | 2.023 | 8 |
| 1.938 | 4 | 1.949 | 4 |
| 1.917 | 10 | 1.926 | 10 |
| 1.860 | 7 | 1.865 | 6 |

EXAMPLE 6

A reaction mixture was prepared having the composition $2.8Na_2O$ : 44Q : $Al_2O_3$ : $51.8SiO_2$ : $833H_2O$ : 32NaCl. 161g Cyclohexylamine were stirred into 419g Syton X-30 colloidal silica ($28.9Na_2O$ : $Al_2O_3$ : $2156SiO_2$ : $18,827H_2O$). Then 7.2g sodium aluminate and 2.7g sodium hydroxide in 40g water were stirred in. Finally 69.3g sodium chloride in 213g water were mixed in. The reaction was in a stainless steel autoclave for 3 days at 150°C. The procedure was then as in Example 1. The resulting highly crystalline Nu-23 had the X-ray data shown in Table 4 columns 3 and 4 and a molar composition $0.37Na_2O$ : 1.0 cyclohexylamine : $Al_2O_3$ : $38SiO_2$ : $9H_2O$.

Claims

1. A crystalline zeolite material, zeolite Nu-23, having a molar composition, on a calcined basis, expressed by the formula:

$0.5$ to $1.5\ M_{2/n}O : X_2O_3$ : at least $5\ YO_2$

wherein M is hydrogen, an alkali metal cation or alkaline earth metal cation, n is the valency of M, Y is silicon and/or germanium and/or phosphorus, and X is one or more of aluminium, gallium or boron and having an X-ray powder diffraction pattern substantially as set out in Table 1.

2. A crystalline zeolite material as claimed in claim 1 having a molar composition expressed by the formula:

$0.5$ to $1.5\ M_{2/n}O : X_2O_3 : 5$ to $5000\ YO_2$

3. A crystalline zeolite material as claimed in claim 1 having a molar composition expressed by the formula:

$0.5$ to $1.5\ M_{2/n}O : X_2O_3 : 25$ to $100\ YO_2$

4. A crystalline zeolite material as claimed in claim 1 having as freshly made, a molar composition expressed by the formula:

$0.5$ to $1.5\ M_{2/n}O : 0.2$ to $130Q : X_2O_3 : 10$ to $5000YO_2 : 0$ to,$000H_2O$

wherein $H_2O$ is water of hydration additional to water notionally present when M is hydrogen and wherein Q is a nitrogen-containing organic base.

5. A method of making a crystalline zeolite material, zeolite Nu-23, as defined in claim 1 which comprises reacting an aqueous mixture containing at least one oxide $YO_2$, at least one oxide $X_2O_3$, and at least one organic compound selected from cyclohexylamine and derivatives thereof, the organic compound(s) having the formula

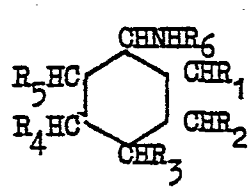

where $R_1$ to $R_5$ which can be the same or different are selected from hydrogen, hydroxyl, $C_1$ to $C_4$ alkyl, and $R_6$ is selected from hydrogen and $C_1$ to $C_4$ alkyl.

6. A method as claimed in claim 5 wherein the substituents $R_1$ to $R_6$ of the organic compound are independently selected from hydrogen and methyl.

7. A method as claimed in claim 5 or 6 wherein the organic compound is selected from cyclohexylamine, methylaminocyclohexane and 2-aminocyclohexanol.

8. A method as claimed in any one of claims 5 to 7 wherein the aqueous reaction mixture has the molar composition:

$YO_2/X_2O_3 \geqslant 10$;

$H_2O/YO_2 \geqslant 10$;

$Q/YO_2 \geqslant 0.10$;

$\frac{2}{n} A/YO_2 \geqslant 0.2$ where A is a chloride or a sulphate ion;

$OH^-/YO_2 \geqslant 0.05$;

$H_2O/OH^- \geqslant 100$;

9. A method as claimed in claim 8 wherein the aqueous reaction mixture has the molar composition:

$YO_2/X_2O_3$ in the range 10 to 10,000;

$H_2O/YO_2$ in the range 10 to 200;

$Q/YO_2$ in the range 0.01 to 1.5;

$\frac{2}{n} A/YO_2$ in the range 0.4 to 0.8 where A is a chloride or sulphate anion;

$OH^-/YO_2$ in the range 0.05 to 0.5;

$H_2O/OH^-$ in the range 100 to 1,000;

10. A method as claimed in claim 8 or 9 wherein the aqueous reaction mixture has the molar composition:

$YO_2/X_2O_3$ in the range 25 to 100;

$H_2O/YO_2$ in the range 15 to 50;

$Q/YO_2$ in the range 0.20 to 1.0;

$OH^-/YO_2$ in the range 0.05 to 0.3;

$H_2O/OH^-$ in the range 120 to 700.

11. A catalyst comprising a crystalline zeolite material as claimed in any one of claims 1 to 4.

0103981

European Patent Office

# EUROPEAN SEARCH REPORT

Application number

EP 83 30 4723

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | EP-A-0 059 059 (ICI)<br>--- | | C 01 B 33/28<br>B 01 J 29/28 |
| A | EP-A-0 014 544 (MOBIL OIL)<br>--- | | |
| A | EP-A-0 014 546 (MOBIL OIL)<br>----- | | |
| | | | TECHNICAL FIELDS SEARCHED (Int. Cl. 3) |
| | | | C 01 B 33/00<br>B 01 J 29/00 |

The present search report has been drawn up for all claims

| Place of search | Date of completion of the search | Examiner |
|---|---|---|
| BERLIN | 22-11-1983 | KESTEN W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82